# EUROPÄISCHE PATENTSCHRIFT

(11) **EP 1 585 698 B1**
(45) Veröffentlichungstag und Bekanntmachung des Hinweises auf die Patenterteilung: **14.03.2007**
(21) Anmeldenummer: 03782358.0
(22) Anmeldetag: 10.12.2003
(51) Int. Cl.: B65H 63/00

(54) **VERFAHREN ZUM STEUERN EINES FADENVERARBEITUNGSSYSTEMS UND FADENVERARBEITUNGSSYSTEM**
METHOD FOR CONTROLLING A THREAD PROCESSING SYSTEM AND THREAD PROCESSING SYSTEM
PROCEDE POUR COMMANDER UN SYSTEME DE FABRICATION DE FILS ET SYSTEME DE FABRICATION DE FILS ASSOCIE

(30) Priorität: 14.01.2003 DE 10301095
(43) Veröffentlichungstag der Anmeldung: 19.10.2005
(73) Patentinhaber: IRO AB, 523 01 Ulricehamn (SE)
(72) Erfinder: THOLANDER, Lars, Helge, Gottfrid, S-310 42 Haverdal (SE)
(74) Vertreter: Grünecker, Kinkeldey, Stockmair & Schwanhäusser Anwaltssozietät
(86) Internationale Anmeldenummer: PCT/EP2003/014010
(87) Internationale Veröffentlichungsnummer: WO 2004/063072

(56) Entgegenhaltungen:
- EP-A- 0 461 078
- EP-A- 0 628 647
- DE-A- 10 103 342
- US-A- 5 246 039

## Beschreibung

Die Erfindung betrifft ein Verfahren gemäß Oberbegriff des Anspruchs 1 und ein Fadenverarbeitungssystem gemäß Oberbegriff des Anspruchs 5.

Im Betrieb eines Fadenverarbeitungssystems findet zwischen vielen Komponenten und der Hauptsteuereinheit eine rege Kommunikation statt, bei der nicht nur Operationsinformationen der Textilmaschine übertragen werden, sondern auch Funktionen bei oder über die Komponenten veranlasst und ggfs. Rückmeldungen übertragen werden. Durch die Fülle der zu übertragenden Daten kann bei bestimmten Betriebskonditionen das Kommunikations-Bussystem und/oder die Hauptsteuereinheit der Textilmaschine überfordert sein, so dass ein Datenstau auftritt bzw. wichtige Daten nicht ausreichend rasch übertragen werden. Signale des Fadenbewegungen und/oder Fadenbrüche überwachenden Sensors (Gutsignale und/oder Fehlersignale) sind für den korrekten Operationsablauf bzw. schnell einzuleitende Abschalt- oder Korrekturmaßnahmen zeitkritisch. Es ist deshalb bekannt, jeden Sensor über eine eigene Signalübertragungsleitung an die Hauptsteuereinheit anzuschließen, die komplex ausgelegt wird, um die Signale identifizieren und zuordnen zu können. Ferner muss die Hauptsteuereinheit die Signale auswerten und verarbeiten, während sie gegebenenfalls gleichzeitig mit anderen Komponenten des Fadenverarbeitungssystems kommuniziert. Die aufwendige Ausbildung der Hauptsteuereinheit ist teuer und kann eine Quelle für Systemstörungen oder Verzögerungen bilden.

Aus einer Internet-Information "TE 400 Cmatic" der Firma Nuova Roj Electrotex, Biella, Italien, ist es bekannt, einen durch einen Mikrocontroller gesteuerten Schussfaden-Mehrfachdetektor für Greiferwebmaschinen an das im Fadenverarbeitungssystem vorgesehene CAN-Bussystem anzuschließen und das CAN-Bussystem zu benutzen, um den Sensor bei der permanenten Optimierung der Ansprechempfindlichkeit zu steuern. Diese Steuerung umfasst das Verstellen der Ansprechempfindlichkeit, das Aktivieren und Deaktivieren des Sensors und die Datenbeschaffung beim Überwachen der Ansprechempfindlichkeit. Durch die Optimierung der Ansprechempfindlichkeit des Sensors lässt sich die Schussfadenankunftseinstellung für jede Fadenqualität automatisch optimieren, ohne dass Bedienungspersonal einzugreifen bräuchte. In dem CAN-Bussystem werden Operationsinformationen der Webmaschine übertragen, beispielsweise das Ende jedes Eintrags, um dann automatisch eine Einstellung der Ansprechempfindlichkeit des Sensors vorzunehmen. Die optimale Einstellung wird dann nach einigen Eintragvorgängen erreicht. Das Ausgangssignal des Sensors, der gegebenenfalls mehrere gleichzeitig laufende Schussfäden überwacht, variiert und wird in der Hauptsteuereinheit der Textilmaschine ausgewertet. Wird bei der Auswertung die Relevanz des Ausgangssignals hinsichtlich einer Systemabschaltungs- und/oder Systemkorrekturmaßnahme festgestellt, dann veranlasst die Hauptsteuereinheit die jeweils erforderliche Maßnahme. Es wird entweder das Fadenverarbeitungssystem abgeschaltet, oder beispielsweise bei einem Fadenbruch in einem Fadenkanal die Aufgabe der zusätzlichen Fadenlieferung auf einen funktionsfähigen anderen Fadenkanal übertragen, ohne die Textilmaschine abzuschalten. Die Hauptsteuereinheit nimmt also die Signalauswertung vor, während sie gegebenenfalls zur gleichen Zeit mit anderen Komponenten des Fadenverarbeitungssystems zu kommunizieren hat.

Aus EP 628 647 A ist eine Steuervorrichtung für eine kontinuierlich arbeitende Spinnereimaschine bekannt, bei der eine zentrale Steuereinheit über einen Bus mit mehreren Sensoren oder Aktoren der Spinnereimaschine verbunden und eine intelligente Multifunktionsbaugruppe vorhanden ist, die zur selbständigen Verarbeitung der Signale der Sensoren und der Steuerung der Aktoren dient. Die Multifunktionsbaugruppe ist praktisch für jeden Steuerungszweck in der Spinnereimaschine einsetzbar. Die zentrale Steuereinheit übernimmt nur übergeordnete Steuerungsaufgaben, wie das Anfahren und Stillsetzen der Spinnereimaschine, und die Koordination der einzelnen Teilsteuerungsaufgaben. Die Kommunikation zwischen der Hauptsteuereinheit und der Multifunktionsbaugruppe beschränkt sich auf übergeordnete Funktionen wie Start- und Stopp-Anweisungen oder Zugreifen auf Maschinendaten zur statistischen Auswertung oder zu Protokollzwecken. Zeitkritische Prozesse laufen direkt in der Multifunktionsbaugruppe ab, wobei die zentrale Steuereinheit mit den Steueraufgaben der Multifunktionsbaugruppe nicht belastet ist.

Der Erfindung liegt die Aufgabe zugrunde, ein Verfahren und ein Fadenverarbeitungssystem dahingehend zu verbessern, dass die Hauptsteuereinheit der Textilmaschine entlastet wird und Operationsstörungen aufgrund überhöhter Datenflut minimiert werden. Die Aufgabe gilt gleichermaßen für Fadenverarbeitungssysteme mit einer fadenkonsumierenden Webmaschine oder einer Strickmaschine.

Die gestellte Aufgabe wird verfahrensgemäß mit den Merkmalen des Anspruchs 1 und vorrichtungsgemäß mit den Merkmalen des Anspruchs 5 gelöst.

Verfahrensgemäß wird die Hauptsteuereinheit der Textilmaschine entlastet, weil die Signalauswertung der Signale des Sensors nicht mehr in der Hauptsteuereinheit durchgeführt werden braucht, sondernd diese Aufgabe an die ausgewählte Substeuereinheit delegiert ist, die die Signalauswertung mit Hilfe der bereitgestellten Operationsablauf-Informationen der Web- oder Strickmaschine durchführt. Dies bedeutet, dass die Hauptsteuereinheit selten und nur mehr als relevant ausgewertete Signale erhält, die umgehend zum Einleiten einer Systemabschaltungs- und/oder Systemkorrekturmaßnahme verarbeitet werden.

Im Fadenverarbeitungssystem ist eine ausgewählte Substeuereinheit mit einer Auswerteschaltung ausgestattet und mit der Aufgabe der Auswertung der Signale des Sensors betraut, um nur als relevant ausgewertete Signale an die Hauptsteuereinheit zu übertragen, hingegen den Normalbetrieb repräsentierende Signale gar nicht zur Hauptsteuereinheit gelangen zu lassen. Damit die Substeuereinheit die Auswertung vornehmen kann, erhält oder hat sie von dem Übermittler die Informationen, die die Beurteilung der Signale im Operationsablauf des Fadenverarbeitungssystems ermöglichen. Zweckmäßig wird eine Substeuereinheit ausgewählt, die ohnedies schon mit Operationsinformationen der Textilmaschine versorgt wird, und zwar aus anderen Gründen, und diese Informationen gewinnbringend nutzt, um auch die Signale des Sensors auszuwerten. Auf diese Weise bleibt die Kommunikation im Bereich der Hauptsteuereinheit mit den Signalen des Sensors auf ein notwendiges Minimum beschränkt und wird die Hauptsteuereinheit entlastet.

Da nicht jedes Signal des Sensors an die Hauptsteuereinheit übertragen wird, sondern nur als relevant ausgewertete Signale, lässt sich zur Übertragung jedes relevant ausgewerteten Signals problemlos das Kommunikations-Bussystem benutzen.

Alternativ kann, z.B. in einem komplexen Fadenverarbeitungssystem mit vielen kommunizierenden Komponenten, ein relevant ausgewertetes Signal auf einer separaten Eventleitung an die Hauptsteuereinheit übertragen werden. Das Kommunikations-Bussystem wird benutzt, um vor der Übertragung die Hauptsteuereinheit zu informieren, welche Bedeutung oder welchen Absender das auf der Eventleitung übertragene, als relevant ausgewertete Signal hat, damit die Hauptsteuereinheit entsprechend reagieren kann. Hierbei belastet das relevant ausgewertete Signal die Kommunikation der Hauptsteuereinheit nicht, da es getrennt auf der Eventleitung übertragen wird.

Zweckmäßig werden als nicht relevant ausgewertete Signale bereits von der Substeuereinheit verworfen und gar nicht an die Hauptsteuereinheit weitergegeben, falls sie ohnedies keine Systemmaßnahmen erfordern.

Im Fadenverarbeitungssystem kann der Informations-Übermittler für die Substeuereinheit die Hauptsteuereinheit selbst sein. Die Substeuereinheit erhält von der Hauptsteuereinheit alle Informationen, die die Substeuereinheit zum Auswerten der Signale des Sensors benötigt. Diese Informationen beziehen sich beispielsweise auf den Drehwinkel der Hauptwelle der Textilmaschine und/oder auf Webmuster. Das Fadenverarbeitungssystem weist zweckmäßigerweise mehrere Fadenkanäle auf, wobei die ausgewählte Substeuereinheit die Signalauswertung für alle Fadenkanäle zentral und von der Hauptsteuereinheit separiert durchführt.

Alternativ kann der Informations-Übermittler auch ein Informationsspeicher sein, in welchem die zum Auswerten benötigten Informationen für die Substeuereinheit verfügbar sind. Vorzugsweise ist ein programmierbarer bzw. akutalisierbarer Informationsspeicher vorgesehen, der entweder in die Substeuereinheit integriert oder mit dieser datenübertragend verbunden ist.

Da ein als relevant ausgewertetes Signal relativ selten an die Hauptsteuereinheit zu übertragen ist, kann ohne weiteres das an sich auch Operationsinformationen der Textilmaschine an alle angeschlossenen Komponenten übertragende Kommunikations-Bussystem zur Signalübertragung verwendet werden. Dies spart separate Signalübertragungsleitungen ein. Das Kommunikations-Bussystem überträgt ein als relevant ausgewertetes Signal als eine Nachricht, die von der Hauptsteuereinheit gelesen und entsprechend berücksichtigt wird.

Alternativ kann die Substeuereinheit parallel über eine Eventleitung und das Kommunikations-Bussystem an die Hauptsteuereinheit angeschlossen sein. Auf der Eventleitung wird das jeweils relevant ausgewertete Signal an die Hauptsteuereinheit übertragen. Vor der Übertragung wird das Signal über das Kommunikations-Bussystem für die Hauptsteuereinheit identifiziert, so dass die Hauptsteuereinheit genau informiert ist, welche Bedeutung und welchen Absender das relevant ausgewertete Signal hat, und welche Maßnahme dann einzuleiten ist. Die Identifikation kann beispielsweise dadurch erfolgen, dass das Kommunikations-Bussystem ein Zeit- oder Drehwinkelfenster vorgibt, innerhalb dessen ein ankommendes Signal nur ein relevant ausgewertetes Signal vom Sensor sein muss.

Zweckmäßig ist das Kommunikations-Bussystem ein CAN-Bussystem, das mit einem Protokoll operiert, in welchem unterschiedlichen Nachrichten verschiedene Prioritäten zugeordnet werden, so dass besonders zeitkritische Signale in Form von Nachrichten höchster Priorität sehr schnell, z.B. seriell übertragen werden, beispielsweise mit einer maximalen Verzögerung von z.B. 300 µs.

Um das Kommunikations-Bussystem weiter zu entlasten, kann eine separate Textilmaschinen-Drehwinkel-Busleitung zumindest zwischen der Hauptsteuereinheit und der ausgewählten Substeuereinheit vorgesehen sein. Die auf dieser Busleitung übertragenen Drehwinkelinformationen kann die Substeuereinheit zum Auswerten der Signale des Sensors nutzen. Die Drehwinkelsignale werden im Regelfall auf der Busleitung ohnedies an mehrere Komponenten innerhalb des Fadenverarbeitungssystems übertragen, und können von der Substeuereinheit zur Auswertung der Signale des Sensors genutzt werden.

Ein weitere wichtiger Gedanke besteht darin, auf dem Kommunikations-Bussystem Webmuster-Informationen als Nachrichten zumindest an die Sub-Steuereinheit zu übertragen, die die Auswertung der Signale des Sensors vorzunehmen hat. Die Textilmaschine ist eine Webmaschine. Die Webmuster-Information kann alternativ oder additiv zur Drehwinkelinformation für die Auswertung benutzt werden. Da das Kommunikations-Bussystem durch Delegieren der Aufgabe der Signalauswertung an die Substeuereinheit für die Hauptsteuereinheit entlastet wird, kann das Kommunikations-Bussystem z.B. zum Steuern des Sensors benutzt werden, d.h. dass der Sensor aktiviert/deaktiviert, seine Ansprechempfindlichkeit eingestellt, und die Ansprechempfindlichkeit überwacht wird. Diese Nachrichten werden von der Hauptsteuereinheit ausgegeben, die an das Steuerpaneel der Textilmaschine angeschlossen ist, an dem die erforderlichen Einstellungen vorgenommen oder programmiert sein können. Alternativ wäre es denkbar, die Substeuereinheit mit der Aufgabe auch der Sensorsteuerung zu betrauen, was bedeuten kann, dass dann an der Substeuereinheit entsprechende Einstell- und Überwachungseinrichtungen oder -anzeigen vorgesehen sind.

Der Sensor ist zweckmäßig ein mehreren Fadenkanälen gemeinsam zugeordneter Schussfaden-Detektor mit mehreren, vorzugsweise, piezoelektrischen Einzelsensoren, wobei die Fadenkanäle z.B. einer Webmaschine zugeordnet sind.

Im Regelfall enthält das Fadenverarbeitungssystem mehrere von der Hauptsteuereinheit separierte Substeuereinheiten für die verschiedensten Komponenten, deren jede von vornherein für die Signalauswertung mit ausreichender Intelligenz, z.B. einer Auswerteschaltung, ausgestattet sein kann.,Aus diesen Substeuereinheiten kann jede beliebige ausgewählt werden, um die Signalauswertung und die Übertragung nur als relevant ausgewerteter Signale an die Hauptsteuereinheit zu übernehmen. Zweckmäßig wird eine Substeuereinheit ausgewählt, die im Fadenverarbeitungssytem an passender Position z.B. an der Stromabseite eines Liefergeräts angeordnet ist und/oder ohnedies nur wenige Funktionen auszuführen hat, so dass die Signalauswertung und -übertragung relevant ausgewerteter Signale für die ausgewählte Substeuereinheit keine Überbelastung bedeutet.

Anhand der Zeichnung werden Ausführungsformen des Erfindungsgegenstandes erläutert. Es zeigen:
- Fig. 1: schematisch ein Fadenverarbeitungssystem mit Grundkomponenten, wobei zwei Signalübertragungs-Alternativen gezeigt sind,
- Fig. 2: eine Detail einer weiteren Ausführungsform eines Fadenverarbeitungssystems, und
- Fig. 3: ein Schema eines komplexen Fadenverarbeitungssystems, dessen Textilmaschine eine Webmaschine ist.

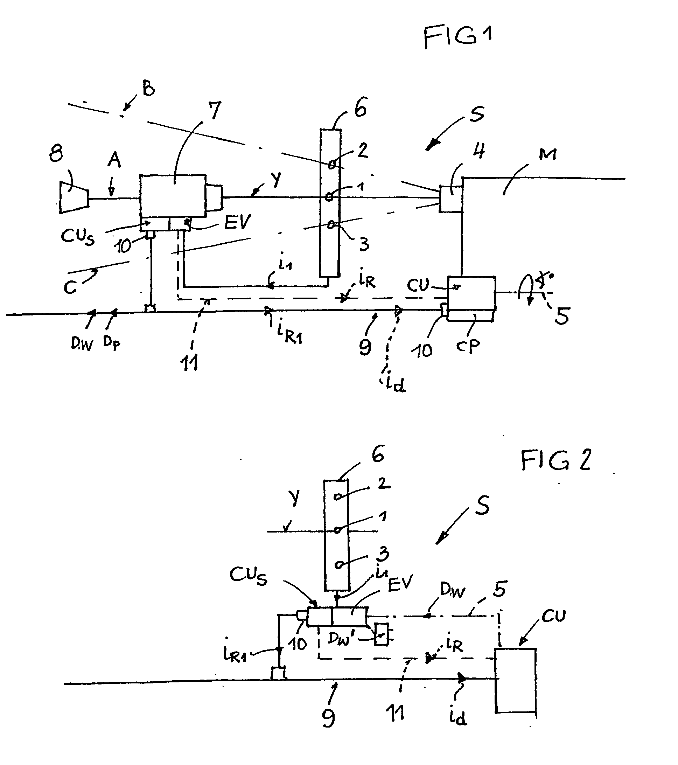

In den Fig. 1 bis 3 werden Fadenverarbeitungssysteme S gezeigt, deren Textilmaschine M eine Webmaschine ist. Die Webmaschine kann eine Greiferschützenwebmaschine, eine Düsenwebmaschine oder eine Projektilwebmaschine sein. Alternativ kann die fadenkonsumierende Textilmaschine des Fadenverarbeitungssystems S eine Strickmaschine (nicht gezeigt) sein.

In Fig. 1 ist die Textilmaschine M (Webmaschine) mit einer Hauptsteuereinheit CU ausgestattet, die auf einer Leitung 5 Operationsinformationen beispielsweise zum Drehwinkel einer Hauptwelle erhält. Die Hauptsteuereinheit CU kann einen Steuerungsteil CP umfassen oder an diesen angeschlossen sein, in welchem Webmusterinformationen gespeichert oder bereitgestellt sind. Der Textilmaschine M werden in beispielsweise drei Fadenkanälen A, B, C Schussfäden Y von Liefergeräten 7 geliefert (nur ein Liefergerät 7 ist gezeigt). Jedes Liefergerät 7 zieht den Schussfaden Y von einer Vorratsspule 8 ab, speichert den Schussfaden, und lässt den Schussfaden von einem nicht gezeigten Eintragssystem der Textilmaschine M intermittierend und webmusterabhängig eintragen. Entlang des Fadenkanals, gegebenenfalls sogar bei der Vorratsspule 8, sind nicht näher hervorgehobene Funktionskomponenten des Fadenverarbeitungssystems S vorgesehen, beispielsweise ein Sensor 6, der als sogenannter Schussfadendetektor ausgebildet ist und mehrere Einzelsensoren 1, 2, 3 für die Fadenkänale A, B, C enthält. Die Einzelsensoren 1, 2, 3 können beispielsweise piezoelektrische Sensoren sein. Der Sensor 6 überwacht während der Operation des Fadenverarbeitungssystems S jeden Schussfaden Y auf seine Fadenbewegung und/oder einen Fadenbruch und liefert elektrische Signale, die die Fadenkonditionen repräsentieren. Dies ist eine bekannte Technologie.

Das Liefergerät 7 hat eine eigene Substeuereinheit CUₛ, die den Antrieb des Liefergeräts 7 unter Berücksichtigung von Signalen nicht gezeigter Fadensensoren und dgl. steuert. Dies ist bekannte Technik. Die Substeuereinheit CUₛ ist hier mit einer Auswerteschaltung EV ausgestaltet, die in Hardware- oder Software-Form gebildet sein kann.

Das Fadenverarbeitungssystem S enthält ein schnelles Kommunikations-Bussystem 9, beispielsweise ein CAN-Bussystem, an das verschiedene Komponenten des Fadenverarbeitungssystems S zur Kommunikation angeschlossen sind. Gezeigt ist, dass über entsprechende Schnittstellen-Prozessoren 10 die Hauptsteuereinheit CU mit der Substeuereinheit CU_{S} kommuniziert. Beispielsweise überträgt das Kommunikations-Bussystem 9 Operationsinformationen D_{W} und D_{P} der Textilmaschine an die angeschlossenen Komponenten. Die Information D_{W} ist beispielsweise die Drehwinkelinformation der Hauptwelle der Textilmaschine, während die Information D_{P} eine Webmusterinformation, beispielsweise vom Steuerungsteil CP ist.

Der Sensor 6 ist an die Substeuereinheit CU_{S} angeschlossen und überträgt beispielsweise ein Signal i₁ des Schussfadens Y im Einzelsensor 1. Anhand der Textilmaschinen-Informationen D_{W} und/oder D_{P} wertet die Substeuereinheit CU_{S} das Signal i₁ aus, und zwar im Hinblick auf Relevanz für eine zu veranlassende Systemabschaltungs- und/oder Systemkorrekturmaßnahme, die von der Hauptsteuereinheit CU vorzunehmen ist. Wird bei der Auswertung festgestellt, dass das Signal i₁ (ein Fehlersignal oder ein in dieser Operationsphase nicht zulässiges Gutsignal) für eine solche Maßnahme relevant ist, dann überträgt die Substeuer-Einheit CU_{S} unmittelbar ein als relevant ausgewertetes Signal i_{R1} im Kommunikations-Bussystem 9 an die Hauptsteuereinheit CU. Die Hauptsteuereinheit CU veranlasst dann eine entsprechende Maßnahme. Repräsentiert das Signal i₁ z.B. einen Fadenbruch, dann schaltet die Hauptsteuereinheit CU die Textilmaschine und/oder das fadenverarbeitende System S ab, oder U auf einen anderen Fadenkanal B oder C um, um den gebrochenen Schussfaden aus einem anderen Fadenkanal einzutragen. Wird bei der Auswertung in der Substeuereinheit CU_{S} festgestellt, dass das Signal i₁ (ein für diese Operationsphase korrektes Fehlersignal oder ein erwartetes Gutsignal) für eine durchzuführende Maßnahme nicht relevant ist, dann wird das Signal verworfen und nicht an die Hauptsteuereinheit CU übertragen.

Gestrichelt ist in Fig. 1 eine Alternative zur Signalübertragung angedeutet, und zwar in Form einer eigenen Eventleitung 11, die zumindest von der Substeuereinheit CU_{S} zur Hauptsteuereinheit CU verläuft. Auf der Eventleitung 11 wird jedes als relevant ausgewertete Signal i_{R} übertragen. Damit die Hauptsteuereinheit CU weiß, welche Bedeutung und/oder welchen Absender das auf der Eventleitung 11 eintreffende Signal i_{R} hat (an die Eventleitung 11 können gegebenenfalls weitere Komponenten des Fadenverarbeitungssystems S zur Übertragung anderer Signal angeschlossen sein, identifiziert), das Kommunikations-Bussystem 9 vorab das Signal i_{R} als ein als relevant ausgewertetes Signal des Sensors 6, beispielsweise mittels einer Nachricht i_{d}, die z.B. festlegt, dass jedes innerhalb eines ausgewählten Zeitfensters oder Drehwinkelfensters eintreffende Signal auf der Eventleitung ein als relevant ausgewertetes Signal des Sensors 6 ist, das einer entsprechenden Maßnahme bedarf.

Fig. 2 verdeutlicht eine alternative Ausführungsform, bei der der Sensor 6 mit einer Substeuereinheit CU_{S} kooperiert, an die er seine Signale, beispielsweise das Signal i₁, überträgt. Die Substeuereinheit CU_{S} weist eine Auswerteschaltung EV auf und ist beispielsweise über den Schnittstellenprozessor 10 an das Kommunikations-Bussystem 9 angeschlossen, in welchem Textilmaschinen-Operationsinformationen (wie in Fig. 1 ) angeboten werden, die für die Auswertung nötig sind. Auf diese Weise kann die Substeuereinheit CU_{S} über das Kommunikations-Bussystem 9 mit der Hauptsteuereinheit CU kommunizieren (ähnlich wie in Fig. 1), um das jeweils relevant ausgewertete Signal i_{R1} an die Hauptsteuereinheit CU zu übertragen.

Gestrichelt ist in Fig. 2 die Eventleitung 11 als Alternative zur Signalübertragung angedeutet, auf der die Substeuereinheit CU_{S} ein als relevant ausgewertetes Signal i_{R} an die Hauptsteuereinheit CU überträgt. Voreilend wird, beispielsweise veranlasst durch die Substeuereinheit CU_{S}, im Kommunikations-Bussystem 9 die Identifikation i_{d} an die Hauptsteuereinheit CU übertragen, um die Hauptsteuereinheit CU entsprechend zu informieren, welche Bedeutung und/oder welchen Absender das Signal i_{R} hat. Die Hauptsteuereinheit CU setzt sozusagen das Signal i_{R} mit der Identifikation i_{d} zusammen, um das als relevant ausgewertete Signal i_{R1} auszulesen (an die Eventleitung 11 könnten auch weitere Komponenten zur Übertragung anderer Signale angeschlossen sein).

Als weitere Alternative zeigt Fig. 2 strichpunktiert eine Leitung 5, über welche, z.B. von der Hauptsteuereinheit CU, Drehwinkelinformationen D_{W} an die Substeuereinheit CU_{S} übertragen werden, mit deren Hilfe diese die Auswertung der Signale i₁ (oder der entsprechenden Signale auch von den anderen Einzelsensoren 2, 3) durchführt. Die Leitung 5 könnte auch zu anderen Komponenten des Fadenverarbeitungssystems weitergeführt sein.

Als eine weitere Alternative zeigt Fig. 2 einen Informations-Übermittler, der entweder in die Substeuereinheit CU_{S} integriert oder an diese angeschlossen ist, und der die zur Auswertung erforderlichen Textilmaschinen-Operationsinformationen, beispielsweise D_{W}, bereitstellt. Dieser Übermittler kann eine Speichervorrichtung sein, die programmierbar oder einstellbar ist.

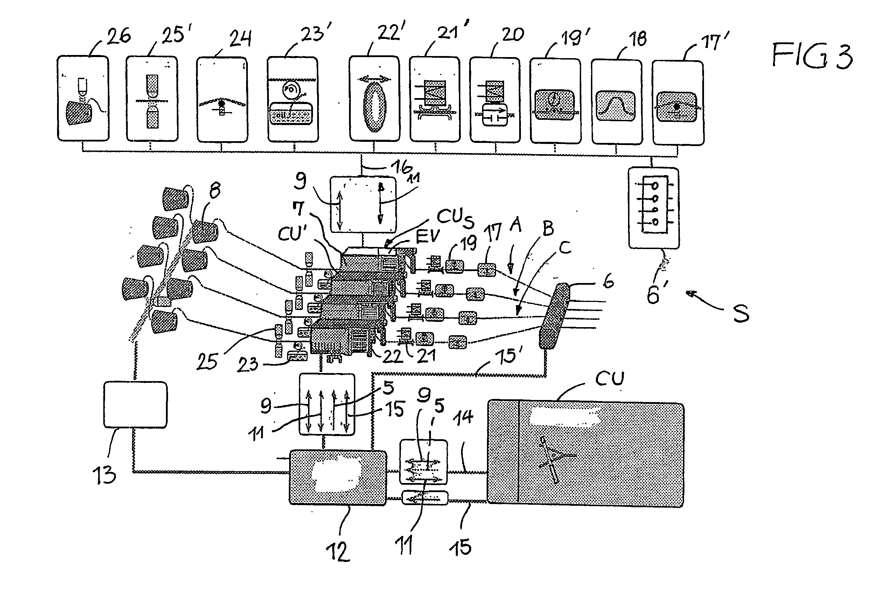

Fig. 3 verdeutlicht ein komplexes Fadenverarbeitungssystem S, deren Kernstück eine nicht gezeigte Webmaschine mit einer Hauptsteuereinheit CU ist. Es sind mehrere Fadenkanäle A bis C und eine den Fadenkänalen gemeinsamer Sensor 6 in Form eines Schussfadendetektors mit Einzelsensoren vorgesehen. Jeder Fadenkanal kann stromauf wenigstens einer Vorratsspule 8 einen Qualitätssensor 25, einen Fadenöler 23, ein Liefergerät 7 mit einer Substeuereinheit CU_{S}, eine gesteuerte Fadenbremse 22, einen gesteuerten Fadenspanner 21, einen Tensiometer 19, und einen individuellen Schussfadendetektor 17 vor dem Sensor 6 aufweisen. Diese Komponenten sind in Fig. 3 in einer Kopfleiste nochmals vergrößert in viereckigen Blöcken gezeigt, wobei jedem Block die Bezugsziffer der Komponente mit einem Apostroph zugeordnet ist. Zusätzlich können weitere Komponenten ein stromauf des jeweiligen Liefergeräts 7 angeordneter Schussfadenbruchwächter 24 sein, oder eine Druckluftreinigungsvorrichtung 20, oder eine Fadensteuerungskomponente 18. Die Komponenten sind über eine Leitung 16 kommunizierend mit der Substeuereinheit CU_{S} verbunden, wobei die Leitung 16 Abschnitte des Kommunikations-Bussystems 9 und der Eventleitung 11 zusammenfasst. Die Substeuereinheit CU_{S} des Fadenliefergeräts 7 ist als die ausgewählte Substeuereinheit für die Auswertung beispielsweise der Signale des Sensors 6 oder des individuellen Sensors 17 im Hinblick auf Relevanz für einzuleitende Systemabschaltungs- und/oder Systemkorrekturmaßnahmen bestimmt, und weist die Auswerteschaltung EV auf. Jedes Liefergerät 7 hat eine Substeuereinheit CU', die gegebenenfalls ebenfalls mit einer Auswerteschaltung EV ausgestattet sein kann. Die ausgewählte Substeuereinheit CU_{S} übernimmt die Signalauswertung für alle Sensoren des fadenverarbeitenden Systems und die Aufgabe der Übermittlung als relevant ausgewerteter Signale an die Hauptsteuereinheit CU. Es könnte aber auch jede andere Substeuereinheit CU' mit dieser Aufgabe betraut sein.

Die Substeuereinheit CU_{S} ist an einen Liefergerät-Steuerkasten 12 angeschlossen, der mit der Hauptsteuereinheit CU über Zweige 14, 15 verbunden ist. Der Zweig 14 umfasst das Kommunikations-Bussystem 9, die Leitung 5 für Drehwinkelinformationen, und die Eventleitung 11. Der Zweig 15 ist ein Stromversorgungszweig, der bei 15' zum Sensor 6 fortgesetzt ist. An den Kasten 12 ist ferner ein Steuerkasten 13 des Vorratsspulensystems mit den Vorratsspulen 8 angeschlossen, wobei in diesem System weitere, hier nicht hervorgehobene Sensoren, z.B. Sensoren 26 enthalten sein können, die ebenfalls mit der Substeuereinheit CU_{S} und/oder der Hauptsteuereinheit kommunizieren können. Ein zwischen dem Steuerkasten 12 und zumindest der Substeuereinheit CU_{S} verlaufender Zweig umfasst das Kommunikations-Bussystem 9, die Eventleitung 11, die Leitung 5 für die Drehwinkelinformationen D_{W}, und eine Leitung 15 zur Stromversorgung. Die einzelnen Komponenten des fadenverarbeitenden Systems S kommunizieren miteinander, sofern sie mit entsprechenden Prozessoren- und Steuereinheiten ausgestattet sind, und auch mit der Hauptsteuereinheit CU, falls erforderlich.

Die Auswertung der Signale des Sensors 6 und/oder der individuellen Sensoren 17 hinsichtlich der Relevanz für zu veranlassende Maßnahmen erfolgt in der wenigstens einen ausgewählten Substeuereinheit CU_{S}. Nur als relevant ausgewertete Signale werden an die Hauptsteuereinheit CU übertragen, und zwar entweder über das Kommunikations-Bussystem 9 oder die Eventleitung 11, wobei im letztgenannten Fall die Identifikation für das auf der Eventleitung 11 übertragene Signal über das Kommunikations-Bussystem in der Hauptsteuereinheit CU vorgenommen wird. Da ein relevant ausgewertetes Signal nur dann an die Hauptsteuereinheit CU übertragen wird, wenn eine Maßnahme (Abschaltung oder Korrektur im System) veranlasst werden muss, die Hauptsteuereinheit CU mit der Auswertung nicht befasst ist, und als nicht relevant ausgewertete Signale bereits in der Substeuereinheit CU_{S} verworfen werden können, werden die Hauptsteuereinheit CU und das Kommunikations-Bussystem 9 diesbezüglich entlastet, und wird eine operationsbedingte Kommunikation im Fadenverarbeitungssystem S erleichtert.

## Patentansprüche

1. Verfahren zum Steuern eines Fadenverarbeitungssystems (S), das eine fadenkonsumierende Webmaschine oder Strickmaschine, wenigstens ein Liefergerät (7), wenigstens einen eine Fadenbewegung und/oder einen Fadenbruch überwachenden, signalerzeugenden Sensor (6, 17), und ein schnelles Kommunikations-Bussystem (9) zumindest für Operations-Informationen der Textilmaschine (M) sowie eine elektronische Hauptsteuereinheit (CU) der Web- oder Strickmaschine und wenigstens eine Substeuereinheit (CU_{S}) umfasst, **dadurch gekennzeichnet, dass** ein Signal (i₁) des Sensors (6, 7) im Hinblick auf Relevanz für eine System-Abschaltungs- und/oder System-Korrektor-Maßnahme in einer von der Hauptsteuereinheit (CU) separierten, ausgewählten und mit Operationsablauf-Informationen der Webmaschine oder Strickmaschine versorgten Substeuereinheit (CU_{S}) des Fadenverarbeitungssystems (S) als relevant ausgewertet wird, dass nur das als relevant ausgewertete Signal (i_{R1}) an die auf den Empfang relevanter Signale ausgelegte Hauptsteuereinheit (CU) übertragen wird, und dass die Hauptsteuereinheit auf das als relevant ausgewertete und übertragene Signal anspricht und eine System-Abschaltungs- und/oder System-Korrekturmaßnahme veranlasst.

2. Verfahren nach Anspruch 1, **dadurch gekennzeichnet, dass** das als relevant ausgewertete Signal (i_{R1}) im Kommunikations-Bussystem (9) an die Hauptsteuereinheit (CU) übertragen wird.

3. Verfahren nach Anspruch 1, **dadurch gekennzeichnet, dass** das als relevant ausgewertete Signal (i_{R}) auf einer vom Kommunikations-Bussystem (9) getrennten Eventleitung (11) an die Hauptsteuereinheit (CU) übertragen und vor der Übertragung in dem Kommunikations-Bussystem (9) für die Hauptsteuereinheit (CU) identifiziert wird.

4. Verfahren nach wenigstens einem der vorhergehenden Ansprüche, **dadurch gekennzeichnet, dass** als nicht relevant ausgewertete Signale von der Substeuereinheit verworfen werden.

5. Fadenverarbeitungssystem (S) mit einer fadenverbrauchenden Webmaschine oder Strickmaschine, wenigstens einem Liefergerät (7), wenigstens einem eine Fadenbewegung und/oder einen Fadenbruch überwachenden, signalerzeugenden Sensor (6, 17), einer elektronischen Hauptsteuereinheit (CU), wenigstens einer elektronischen, von der Hauptsteuereinheit (CU) separierten Substeuereinheit (CU_{S}) und einem schnellen Kommunikations-Bussystem (9) zumindest für Operations-Informationen der Web- oder Strickmaschine, **dadurch gekennzeichnet, dass** wenigstens eine ausgewählte, eine Signalauswerteschaltung (EV) für die Relevanz der Signale aufweisende Substeuereinheit (CU_{S}) mit dem Sensor (6, 17) und mit der Hauptsteuereinheit (CU) kommunizierend verbunden ist, dass für die ausgewählte Substeuereinheit ein Übermittler von Operationsablauf-Informationen der Web- oder Strickmaschine vorgesehen ist, und dass in der Signalauswerteschaltung (EV) mit den Operationsablauf-Informationen die Relevanz der Signale (i₁) hinsichtlich einer Systemabschaltungs- und/oder Systemkorrekturmaßnahme ausgewertet wird.

6. Fadenverarbeitungssystem nach Anspruch 5, **dadurch gekennzeichnet, dass** der Informations-Übermittler die Hauptsteuereinheit (CU) selbst ist.

7. Fadenverarbeitungssystem nach Anspruch 5, **dadurch gekennzeichnet, dass** der Übermittter ein Informationsspeicher (D_{W}'), vorzugsweise ein programmierbarer Informationsspeicher, der Substeuereinheit (CU_{S}) ist.

8. Fadenverarbeitungssystem nach Anspruch 5, **dadurch gekennzeichnet, dass** die Substeuereinheit (CU_{S}) über das jedes als relevant ausgewertete Signal (i_{R1}) als Nachricht übertragende Kommunikations-Bussystem (9) an die Hauptsteuereinheit (CU) angeschlossen ist.

9. Fadenverarbeitungssystem nach Anspruch 5, **dadurch gekennzeichnet, dass** die Substeuereinheit (CU_{S}) parallel über eine vom Kommunikations-Bussystem (9) getrennte Eventleitung (11) für als relevant ausgewertete Signale (i_{R}) und das als Vorab-Nachricht eine Definition (i_{D}) eines als relevant ausgewerteten Signals übertragende Kommunikations-Bussystem (9) an die Hauptsteuereinheit (CU) angeschlossen ist.

10. Fadenverarbeitungssystem nach Anspruch 5, **dadurch gekennzeichnet, dass** das Kommunikations-Bussystem (9) ein CAN-Bussystem mit einem Nachrichten unterschiedliche Prioritäten zuordnenden Protokoll ist.

11. Fadenverarbeitungssystem nach Anspruch 6, **dadurch gekennzeichnet, dass** eine separate Textilmaschinen-Drehwinkel-Busleitung (5) zumindest zwischen der Hauptsteuereinheit (CU) und der ausgewählten Sub-Steuereinheit (CU_{S}) vorgesehen ist.

12. Fadenverarbeitungssystem nach wenigstens einem der vorhergehenden Ansprüche 5 bis 11, **dadurch gekennzeichnet, dass** auf dem Kommunikations-Bussystem (9) Webmuster-Informationen als Nachrichten zumindest an die Sub-Steuereinheit (CU_{S}) übertragbar sind.

13. Fadenverarbeitungssystem nach wenigstens einem der Ansprüche 5 bis 12, **dadurch gekennzeichnet, dass** zwischen der Hauptsteuereinheit (CU) und dem Sensor (6, 17) auf dem Kommunikations-Bussystem (9), vorzugsweise über die jeweils ausgewählte Substeuereinheit (CU_{S}), Sensorsteuersignale repräsentierende Nachrichten übertragbar sind, vorzugsweise zum Aktivieren/Deaktivieren, zum Einstellen der Ansprechempfindlichkeit, und zum Überwachen der Ansprechempfindlichkeitseinstellungen des Sensors.

14. Fadenverarbeitungssystem nach wenigstens einem der Ansprüche 5 bis 13, **dadurch gekennzeichnet, dass** der Sensor (6) ein mehreren Fadenkanälen (A bis C) von Liefergeräten (7) der Webmaschine gemeinsam zugeordneter Schussfaden-Detektor mit mehreren piezoelektrischen Einzelsensoren (1, 2, 3) ist.

15. Fadenverarbeitungssystem nach wenigstens einem der Ansprüche 5 bis 14, **dadurch gekennzeichnet, dass** im Fadenverarbeitungssystem (S) mehrere Substeuereinheiten (CU_{S}) vorgesehen sind, und dass jeder, eine Auswerteschaltung (EV) aufweisenden oder an eine Auswerteschaltung angeschlossenen Substeuereinheit wahlweise die Signalauswertung und die Kommunikation mit der Hauptsteuereinheit zuzuordnen sind.

## Claims

1. Method for controlling a yarn processing system (S) comprising a yarn consuming weaving machine or knitting machine, at least one feeding device (7), at least one signal generating sensor (6, 17) for monitoring a yarn movement and/or a yarn breakage, a rapid communication bus system (9) at least for transmitting operation information of the textile machine (M), an electronic main control unit (CU) of the weaving machine or the knitting machine and at least one sub-control unit (CU_{S}), **characterised in that** a signal (i₁) from the sensor (6, 17) is evaluated with a view to its relevance to a measure to either switch off the system and/or to carry out a correction in the system in a selected sub-control unit (CU_{S}) of the yarn processing system (S) which selected sub-control unit (CU_{S}) is separated from the main control unit (CU) and is supplied with information on the course of the operation of the waving machine or the knitting machine, that only each signal (i_{R1}) evaluated as being relevant is transmitted to the main control unit (CU) which is designed to receive relevant signals, and that the main control unit (CU) responds to the signal which has been evaluated as being relevant and initiates a counter measure for switching off the system and/or for carrying out a correction in the system.

2. Method as in claim 1, **characterised in that** the signal (i_{R1}) evaluated as being relevant is transmitted in the communication bus system (9) to the main control unit (CU).

3. Method as in claim 1, **characterised in that** the signal (i_{R}) evaluated as being relevant is transmitted to the main control unit (CU) via an event line (11) which is separated from the communication bus system (9) and is identified for the main control unit (CU) prior to the transmission in the communication bus system (9).

4. Method as in at least one of the preceding claims, **characterised in that** signals evaluated as being not relevant are abolished by the sub-control unit.

5. Yarn processing system (S) comprising a yarn consuming weaving machine or knitting machine, at least one feeding device (7), at least one signal generating sensor (6, 17) monitoring a yarn movement and/or a yarn breakage, an electronic main control unit (CU), at least one electronic sub-control unit (CU_{S}) which is separated from the main control unit (CU), and a rapid communication bus system (9) at least for transmitting operation information of the weaving machine or knitting machine, **characterised in that** at least one selected sub-control unit (CU_{S}) is connected for communication to the sensor (6, 17) and to the main control unit (CU), that the selected sub-control unit (CU_{S}) comprises a signal evaluation circuit (EV), and that an information transmitter is provided for the selected sub-control unit for transmitting information on the course of the operation of the knitting machine or the weaving machine, and that the relevance of the signals (i₁) with respect to a measure for a system power down and/or for carrying out a correction in the system is evaluated in the signal evaluation circuit (EV) with the help of the information on the course of the operation.

6. Yarn processing system as in claim 5, **characterised in that** the information transmitter is constituted by the main control unit (CU) itself.

7. Yarn processing system as in claim 5, **characterised in that** the information transmitter is an information memory device (D_{w'}), preferably, is a programmable information memory of the sub-control unit (CUₛ).

8. Yarn processing system as in claim 5, **characterised in that** the sub-control unit (CU_{S}) is connected via the communication bus system (9) to the main control unit (CU), and that the communication bus system (9) transmits each signal (i_{R1}) evaluated as being relevant in the form of a message.

9. Yarn processing system as in claim 5, **characterised in that** the sub-control unit (CU_{S}) is connected in parallel to the main control unit (CU) via an event line (11) for signals (i_{R}) evaluated as being relevant, that the event line (11) is separated from the communication bus system (9), and that the communication bus system (9) is connected to the main control unit (CU) for transmitting a definition (i_{D}) as an advance message of a signal evaluated as being relevant.

10. Yarn processing system as in claim 5, **characterised in that** the communication bus system (9) is a CAN-bus system operating with a protocol which associates different priorities to messages.

11. Yarn processing system as in claim 6, **characterised in that** a separate textile machine rotary angle bus line (5) is provided at least between the main control unit (CU) and the selected sub-control unit (CU_{S}).

12. Yarn processing system as in at least one of the preceding claims 5 to 11, **characterised in that** weaving pattern information is transmitted in the form of messages via the communication bus system (9) at least to the sub-control unit (CU_{S}).

13. Yarn processing system as in at least one of claims 5 to 12, **characterised in that** messages are transmitted on the communication bus system (9) between the main control unit (CU) and the sensor (6, 17), preferably via the respective selected sub-control unit (CU_{S}), which messages represent sensor control signals, preferably for activating/de-activating, for setting the response sensitivity and for monitoring the settings of the response sensitivity, respectively, of the sensor.

14. Yarn processing system as in at least one of claims 5 to 13, **characterised in that** the sensor (6) is a weft yarn detector commonly associated with several yarn channels (A to C), and that of feeding devices (7) of the weaving machine comprises several single piezo-electric sensors (1, 2, 3).

15. Yarn processing system as in at least one of claims 5 to 14, **characterised in that** several sub-control units (CU_{S}) are provided in the yarn processing system (S), and that the task of the signal evaluation and of the selective communication with the main control unit can be associated with each sub-control unit which either comprises an evaluation circuit (EV) or which is connected to an evaluation circuit, respectively.

## Revendications

1. Procédé de commande d'un système (S) de traitement de fil qui comprend un métier à tisser ou un métier à tricoter qui consomme du fil, au moins un appareil de fourniture (7), au moins un détecteur (6, 17) qui surveille le déplacement du fil et/ou la rupture du fil et crée un signal et un système (9) de bus de communication rapide prévu au moins pour transmettre des informations de fonctionnement de la machine textile (M), ainsi qu'une unité électronique de commande principale (CU) du métier à tisser ou de la machine à tricoter et au moins une sous-unité de commande (CU_{S}), **caractérisé en ce qu'**un signal (i₁) du détecteur (6, 7) pour le débranchement du système et/ou une disposition de correction du système est évalué comme pertinent dans une sous-unité de commande (CU_{S}) du système (S) de traitement de fil, séparée de l'unité principale de commande (CU), sélectionnée et alimentée en informations sur le déroulement des opérations du métier à tisser ou de la machine à tricoter, **en ce que** seul le signal (i_{R1}) évalué comme pertinent est transmis à l'unité principale de commande (CU) prévue pour recevoir des signaux pertinents et **en ce que** l'unité principale de commande réagit au signal évalué comme pertinent et transmis et lance une mesure de débranchement du système et/ou de correction du système.

2. Procédé selon la revendication 1, **caractérisé en ce que** le signal (i_{R1}) évalué comme pertinent est transmis à l'unité principale de commande (CU) par le système (9) de communication par bus.

3. Procédé selon la revendication 1, **caractérisé en ce que** le signal (i_{R}) évalué comme pertinent est transmis à l'unité principale de commande (CU) sur un conducteur d'événements (11) séparé du système (9) de communication par bus et est identifié avant d'être transmis dans le système (9) de communication par bus prévu pour l'unité principale de commande (CU).

4. Procédé selon au moins l'une des revendications précédentes, **caractérisé en ce que** les signaux évalués comme non pertinents sont rejetés par la sous-unité de commande.

5. Système (S) de traitement de fil qui présente un métier à tisser ou une machine à tricoter qui consomme du fil, au moins un appareil de fourniture (7), au moins un détecteur (6, 17) qui surveille le déplacement du fil et/ou la rupture du fil et crée un signal, une unité électronique principale de commande (CU), au moins une sous-unité électronique de commande (CUₛ) séparée de l'unité principale de commande (CU) et un système (9) de communication rapide par bus utilisé au moins pour les informations sur le fonctionnement du métier à tisser ou de la machine à tricoter, **caractérisé en ce qu'**au moins une sous-unité de commande (CU_{S}) sélectionnée et qui présente un circuit (EV) d'évaluation des signaux qui évalue la pertinence des signaux est reliée à communication au détecteur (6, 17) et à l'unité principale de commande (CU), **en ce qu'**un dispositif de transmission d'informations sur le déroulement du fonctionnement du métier à tisser ou de la machine à tricoter est prévu pour la sous-unité de commande sélectionnée et **en ce que** la pertinence des signaux (i₁) en termes de disposition de débranchement du système et/ou de correction du système est évaluée dans le circuit (EV) d'évaluation des signaux à l'aide des informations sur le déroulement du fonctionnement.

6. Système (S) de traitement de fil selon la revendication 5, **caractérisé en ce que** le dispositif de transmission d'informations constitue l'unité principale de commande (CU) proprement dite.

7. Système (S) de traitement de fil selon la revendication 5, **caractérisé en ce que** le dispositif de transmission est une mémoire d'informations (D_{w'}), de préférence une mémoire programmable d'informations, de la sous-unité de commande (CU_{S}).

8. Système (S) de traitement de fil selon la revendication 5, **caractérisé en ce que** la sous-unité de commande (CU_{S}) est raccordée à l'unité principale de commande (CU) par le système (9) de communication par bus qui transmet comme messages chaque signal (i_{R1}) évalué comme pertinent.

9. Système (S) de traitement de fil selon la revendication 5, **caractérisé en ce que** la sous-unité de commande (CU_{S}) est raccordée en parallèle à l'unité principale de commande (CU) par un conducteur d'événements (11) séparé du système (9) de communication par bus pour les signaux (i_{R}) évalués comme pertinents et **en ce que** le système (9) de communication par bus est raccordé à l'unité principale de commande (CU) et transmet comme message préalable une définition (i_{D}) des signaux évalués comme pertinents.

10. Système (S) de traitement de fil selon la revendication 5, **caractérisé en ce que** le système (9) de communication par bus est un système de bus CAN doté d'un protocole qui attribue des priorités différentes à un message.

11. Système (S) de traitement de fil selon la revendication 6, **caractérisé en ce qu'**un conducteur de bus (5) séparé d'angle de rotation de la machine textile est prévu au moins entre l'unité principale de commande (CU) et la sous-unité de commande (CU_{S}) sélectionnée.

12. Système (S) de traitement de fil selon au moins l'une des revendications 5 à 11 qui précèdent, **caractérisé en ce que** des informations sur l'armure de tissage peuvent être transmises sous la forme de messages au moins à la sous-unité de commande (CU_{S}) sur le système (9) de communication par bus.

13. Système (S) de traitement de fil selon au moins l'une des revendications 5 à 12, **caractérisé en ce que** des messages, de préférence d'activation/désactivation, d'ajustement de la sensibilité de réponse et de surveillance du réglage de sensibilité de réponse du détecteur, qui représentent les signaux de commande du détecteur, peuvent être transmis sur le système (9) de communication par bus entre l'unité principale de commande (CU) et le détecteur (6, 17).

14. Système (S) de traitement de fil selon au moins l'une des revendications 5 à 13, **caractérisé en ce que** le détecteur (6) est un détecteur de fil de trame associé conjointement à plusieurs canaux de fil (A à C) des appareils de fourniture (7) du métier à tisser, et doté de plus détecteurs piézoélectriques séparés (1, 2, 3).

15. Système (S) de traitement de fil selon au moins l'une des revendications 5 à 14, **caractérisé en ce que** plusieurs sous-unités de commande (CU_{S}) sont prévues dans le système (S) de traitement de fil et **en ce que** l'évaluation des signaux et la communication avec l'unité principale de commande peuvent être raccordées sélectivement à chaque sous-unité de commande qui présente un circuit d'évaluation (EV) ou qui est raccordée à un circuit d'évaluation.
